# EUROPEAN PATENT APPLICATION

(11) **EP 4 184 672 A1**
(43) Date of publication of application: **24.05.2023**
(21) Application number: 21218504.5
(22) Date of filing: 31.12.2021
(51) Int. Cl.: H01M 50/147, H01M 50/15, H01M 50/159, H01M 50/176, H01M 50/188, H01M 50/19, H01M 50/342, H01M 50/553, H01M 50/562

(54) **POWER BATTERY TOP COVER STRUCTURE**

(30) Priority: 23.11.2021 CN 202111393511
(71) Applicant: Ningbo Zhenyu Auto Parts Co., Ltd., Ningbo Southern Binhai New Area, Ninghai County Ningbo City Zhejiang Province (CN)
(72) Inventor: HE, Shiya, Ningbo City (CN); CHEN, Chong, Ningbo City (CN); DAI, Qidi, Ningbo City (CN)
(74) Representative: Cabinet Chaillot

(57) **Abstract**

A power battery top cover structure is disclosed in the present invention. A first protrusion protruding obliquely outwards is arranged on a battery pole, the battery pole is placed in a pole hole of a top cover sheet, the first protrusion and an outer peripheral side of the battery pole are protected by injection molding between the pole hole and the battery pole. At the same time, an inner wall of the pole hole is wrapped to complete fixed installation of the battery pole. By arranging the first protrusion, a second protrusion, and a locking recess portion, after the battery pole is placed in the pole hole of the top cover sheet, an insulating barrier is injection-molded between the pole hole and the battery pole to realize the installation on the top cover sheet, which reduces installation accessories, reduces production costs by more than 20%, and at the same time improves the production efficiency, so that the yield and product quality are greatly improved.

## Description

### Technical Field

The present invention relates to the technical field of power lithium batteries, and in particular, to a power battery top cover structure.

### Related Art

Power battery poles are mainly used in power batteries of new energy vehicles, and the power batteries mainly store input electric energy to prepare power supply when the new energy vehicles are running. However, in the related art, the poles are formed by stamping and each equipped with an aluminum ring for installation. During installation on a top cover sheet, the pole must be installed on the top cover sheet through the aluminum ring and a welding process. Therefore, there are many corresponding accessories for the battery poles mentioned above, so that the installation of the poles is more time-consuming, and poor welding easily occurs during the welding. Moreover, the production cost is high, and at the same time, a negative pole is formed by welding a copper plate and an aluminum plate through friction welding; as a result, the welding is easy to fall off and the safety system is low.

### SUMMARY

An objective of the present invention is to design a power battery top cover structure to solve the above technical shortcomings, and a specific structure is described as follows.

A power battery top cover structure designed in the present invention includes a top cover sheet and two power battery poles, wherein the top cover sheet includes two pole holes, the two power battery poles are respectively placed in the two pole holes, and an insulating barrier is injection-molded between the power battery pole and the pole hole;
the two power battery poles each includes a pole body, the pole body includes a pole portion and a connecting portion located on the pole portion, the connecting portion includes a first protrusion located on a root on the pole portion or located on a circumferential side of the pole portion and a second protrusion located on the pole portion, and a locking recess portion for limiting an axial movement of the pole body is formed between the first protrusion and the second protrusion;
an opening edge of the pole hole is provided with a locking block extending toward an interior of the pole hole, and the insulating barrier is provided with a receiving portion, a locking recess, and a locking protrusion, a first concave positioning portion, and a second concave positioning portion that are located in the receiving portion;
the locking block is correspondingly embedded in the locking recess, the connecting portion is received in the receiving portion, the locking protrusion is embedded in the locking recess portion, the first protrusion is correspondingly embedded in the first concave positioning portion, and the second protrusion is correspondingly embedded in the second concave positioning portion; and
an explosion-proof valve is arranged on the top cover sheet, and the explosion-proof valve includes a blasting score.

Preferably, the second protrusion is arranged obliquely to the outside, and the second concave positioning portion is arranged obliquely to match the obliquely arranged second protrusion.

Preferably, the second protrusion includes a conical ring with an upper end diameter greater than a lower end diameter, the second concave positioning portion is a conical annular cavity with an upper end diameter greater than a lower end diameter, and the conical ring of the power battery pole is correspondingly embedded in the conical annular cavity for positioning.

Preferably, a concave portion is formed between the second protrusion and an outer wall of the pole portion, a convex portion is arranged on an upper inner wall of the receiving portion, and the convex portion is correspondingly embedded in the concave portion.

Preferably, a third protrusion is arranged on the second protrusion, and the third protrusion is correspondingly embedded in a third concave positioning portion of the second concave positioning portion.

Preferably, a baffle is arranged on an upper side of an opening of the locking recess, and the baffle is attached to an outer wall of the locking block.

Preferably, the explosion-proof valve further includes a rupture disk body; the rupture disk body is welded to or arranged integrally with a top cover sheet body, the rupture disk body is provided with a first step to form a first surface and a second surface with a height difference, the first surface is located outside an edge of the second surface, the second surface is provided with an edge connection area and a central pressure release area, a connecting portion and a blasting score disconnected at the connecting portion are provided between the edge connection area and the central pressure release area, the central pressure release area is provided with a second step to form a third surface and a fourth surface with a height difference on the second surface (510b), the third surface is located outside an edge of the fourth surface, and the blasting score is C-shaped on a surface of the central pressure release area.

Preferably, a step body is arranged on the insulating barrier, a limiting step is arranged on the pole hole, and the step body and the limiting step are locked in position with each other.

Preferably, the pole hole is further provided with a second recess, the insulating barrier is further provided with a second bump, and the second bump is correspondingly embedded in the second recess.

Preferably, the first protrusion is provided with a plurality of third limiting portions that limit circumferential rotation of the pole body, and the third limiting portions each include a first recess or a first bump, the first recess is arranged on the first protrusion, a first positioning bump is arranged on an inner wall of the first concave positioning portion, and the first positioning bump is correspondingly embedded in the first recess.

As another aspect, a power battery top cover structure preparation method specifically includes the following steps:
S1. Punching an aluminum pole and a copper-aluminum composite pole by a stamping method, so that the aluminum pole and the copper-aluminum composite pole are each formed with a first protrusion, a second protrusion, and a locking recess portion;
S2. Placing a prefabricated top cover sheet in a molding cavity of an injection molding mold, wherein two pole holes on the top cover sheet are respectively located in two mold cavities for molding insulating barriers in the molding cavity;
S3. Placing the punched aluminum pole and copper-aluminum composite pole into the two pole holes of the top cover sheet, respectively, wherein the aluminum pole and the copper-aluminum composite pole are positioned in the two mold cavities, respectively; and
S4. Injecting liquid plastic into the two mold cavities, wherein the liquid plastic enters the space between the pole and the pole hole and forms an insulating barrier after cooling, and a locking block on the pole hole is correspondingly embedded in a locking recess of the insulating barrier, and a locking protrusion of the insulating barrier is embedded in the locking recess portion, the first protrusion is correspondingly embedded in a first concave positioning portion of the insulating barrier, and the second protrusion is correspondingly embedded in a second concave positioning portion of the insulating barrier, for fixing and installing the aluminum pole and the copper-aluminum composite pole in the two pole holes of the top cover sheet through the insulating barrier, respectively.

In a power battery top cover structure and a preparation method thereof designed by the present invention, after a battery pole is placed in a pole hole of a top cover sheet through arrangement of a first protrusion, a second protrusion, and a locking recess portion, an insulating barrier is injection-molded between the pole hole and the battery pole to realize installation on the top cover sheet, which reduces the installation accessories, reduces the production cost by more than 20%, and at the same time improves the production efficiency, so that the yield and product quality are greatly improved. At the same time, a negative pole is made of a copper-aluminum composite material, so that the composite position will not fall off.

### BRIEF DESCRIPTION OF THE DRAWINGS

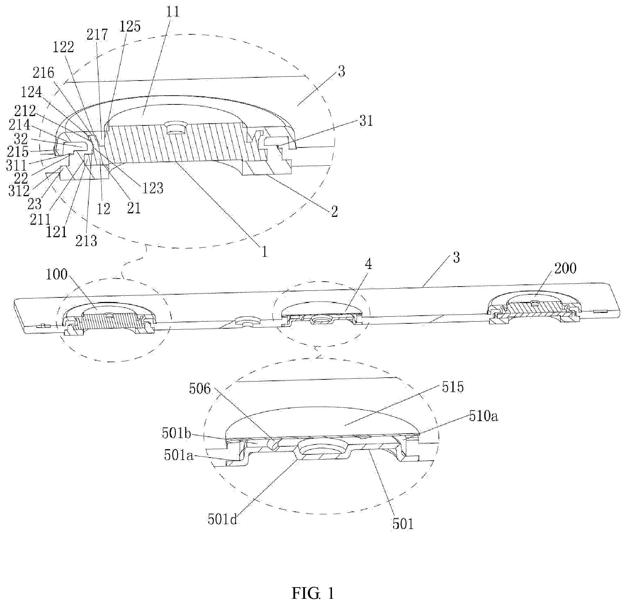

FIG. 1 is a schematic view of an overall structure;

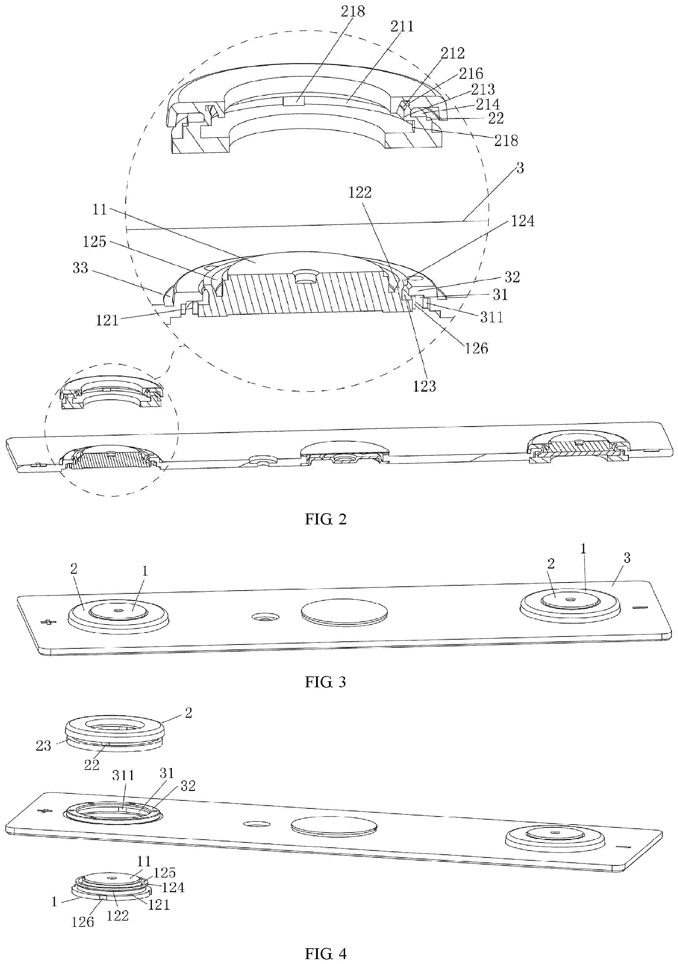

FIG. 2 is an exploded view 1;
FIG. 3 is an exploded view 2;
FIG. 4 is an exploded view 3;

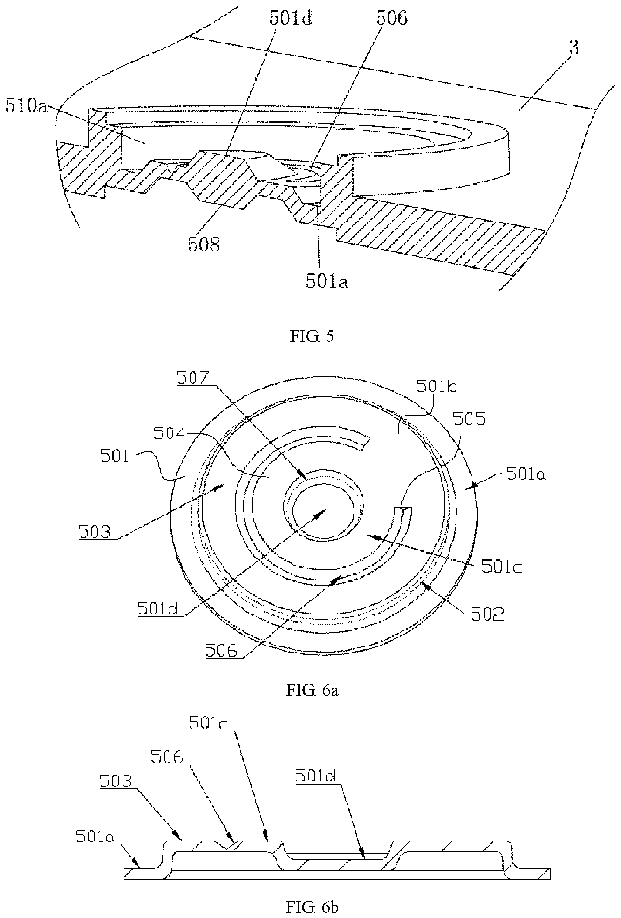

FIG. 5 is a schematic view of a partial structure;
FIG. 6a is a perspective view of Embodiment 1 of a power battery rupture disk according to an embodiment of the utility model;
FIG. 6b is a sectional view of Embodiment 1 of a power battery rupture disk according to an embodiment of the utility model;
FIG. 7a is a perspective view of Embodiment 2 of a power battery rupture disk according to an embodiment of the utility model;
FIG. 7b is a sectional view of Embodiment 2 of a power battery rupture disk according to an embodiment of the utility model;
FIG. 8a is a perspective view of Embodiment 1 of a power battery top cover sheet according to an embodiment of the utility model;
FIG. 8b is a sectional view of Embodiment 1 of a power battery top cover sheet according to an embodiment of the utility model after a protective film is pasted;
FIG. 9 is a sectional view of Embodiment 2 of a power battery top cover sheet according to an embodiment of the utility model without an exhaust groove arranged; and
FIG. 10 is a sectional view of Embodiment 3 of a power battery top cover sheet according to an embodiment of the utility model without an exhaust groove arranged.

Reference numerals are as follows:
1. Power battery pole, 11. Pole portion, 12. Connecting portion, 121. First protrusion, 122. Second protrusion, 123. Locking recess portion, 124. Third protrusion, 125. Concave portion, 126. First recess, 2. Insulating barrier, 21. Receiving portion, 211. First concave positioning portion, 212. Second concave positioning portion, 213. Locking protrusion, 214. Locking recess, 215. Baffle, 216. Third concave positioning portion, 217. Convex portion, 218. First positioning bump, 22. Second bump, 23. Step body, 3. Top cover sheet, 31. Pole hole, 311. Second recess, 312. Limiting step, 32. Locking block, 4. Explosion-proof valve, 100. Positive pole, 200. Negative pole;
501. Rupture disk body, 501a. First surface, 501b. Second surface, 501c. Third surface, 501d. Fourth surface, 502. First step, 503. Edge connection area, 504. Central pressure release area, 505. Connecting portion, 506. Blasting score, 507. Second step, 508. First convex portion, 510. Top cover sheet body, 510a. Explosion-proof hole, 511. First groove, 512. First perforation, 513. Second convex portion, 514. Second perforation, 515. Protective film, 516. Third convex portion, 517. Exhaust groove.

### DETAILED DESCRIPTION

The technical solutions in embodiments of the present invention will be described clearly and completely through the accompanying drawings in the embodiments of the present invention. Apparently, the described embodiments are merely a part of embodiments of the present invention, instead of all embodiments. Based on the embodiments of the present application, all other embodiments derived by those of ordinary skill in the art shall all fall within the protection scope of the present application.

Embodiment:
As shown in the drawing, a power battery top cover structure described in this embodiment includes a top cover sheet 3 and two power battery poles. The top cover sheet 3 includes two pole holes 31, the two power battery poles are respectively placed in the two pole holes 31, and an insulating barrier 2 is injection-molded between the power battery pole and the pole hole 31. The power battery pole is installed and fixed on the top cover sheet by injection molding the insulating barrier, which reduces the installation accessories, reduces the production cost by more than 20%, and at the same time improves the production efficiency, so that the yield and product quality are greatly improved.

The two power battery poles each includes a pole body, the pole body includes a pole portion 11 and a connecting portion 12 located on the pole portion 11. The connecting portion 12 includes a first protrusion 121 located on a root on the pole portion 11 or located on a circumferential side of the pole portion 11 and a second protrusion 122 located on the pole portion 11, and a locking recess portion 123 for limiting an axial movement of the pole body is formed between the first protrusion 121 and the second protrusion 122. The pole body is made of an aluminum material or a copper-aluminum composite material, and the aluminum or copper-aluminum composite material is integrally stamped to form the pole structure of this embodiment. Generally, the aluminum pole is used as a positive pole 100, and the copper-aluminum composite pole is used as a negative pole 200. A pit is arranged in the middle of a top surface of the pole, where the second protrusion 122 is also an annular convex ring, and arranged at the root of the pole portion 11.

An opening edge of the pole hole 31 is provided with a locking block 32 extending toward an interior of the pole hole 31, and the insulating barrier 2 is provided with a receiving portion 21, a locking recess 214, and a locking protrusion 213, a first concave positioning portion 211, and a second concave positioning portion 212 that are located in the receiving portion 21. The locking block 32 is correspondingly embedded in the locking recess 214, the connecting portion 12 is received in the receiving portion 21, the locking protrusion 213 is embedded in the locking recess portion 123, the first protrusion 121 is correspondingly embedded in the first concave positioning portion 211, and the second protrusion 122 is correspondingly embedded in the second concave positioning portion 212. The top cover sheet 3 and the locking block 32 are combined with each other to form an aluminum plate of an integrated structure. The aluminum plate and the pole are positioned in the injection mold, and the pole is placed in the pole hole 31. At this time, after the liquid plastic is injected between the pole and the pole hole 31, the insulating barrier 2 of a ring-shaped structure is formed according to the cavity structure, the pole hole 31, and the pole structure, and wraps an outer peripheral side of the pole. The plastic is made of PPS.

The top cover sheet 3 is provided with an explosion-proof valve 4, and the explosion-proof valve 4 includes a blasting score (506). When an internal pressure of the battery exceeds a preset pressure, the explosion-proof valve may burst open to release the pressure.

In this embodiment, the explosion-proof valve 4 further includes a rupture disk body 501, the rupture disk body 501 is provided with a first step 502 to form a first surface 501a and a second surface 501b with a height difference, and the first surface 501a is located outside an edge of the second surface 501b. The second surface 501b is provided with an edge connection area 503 and a central pressure release area 504, a connecting portion 505 and a blasting score 506 disconnected at the connecting portion 505 are provided between the edge connection area 503 and the central pressure release area 504, the central pressure release area 504 is provided with a second step 507 to form a third surface 501c and a fourth surface 501d with a height difference on the second surface 510b, and the third surface 501c is located outside an edge of the fourth surface 501d. When the rupture disk is subjected to a pressure exceeding a set burst pressure, the central pressure release area 504 at the blasting score 506 can rupture and exhaust in time, and there is no slight leakage and exhaustion before the rupture.

Specifically, the blasting score 506 is C-shaped on the second surface 501b, and both ends of the blasting score 506 are connected to two ends of the connecting portion 505, respectively. The blasting score 506 is arranged in a disconnected form to prevent the blasting score 506 from separating from the central pressure release area 504 during pressure release.

In this embodiment, the rupture disk body 501 is in the shape of a disc as a whole, and the blasting score 506 covers the second surface 501b in an angular range of about 260 degrees to 330 degrees.

Specifically, the cross section of the blasting score 506 is V-shaped, and the angle is 40 degrees to 120 degrees.

Preferably, the second surface 501b protrudes from the first surface 501a, and the bottom of the second surface 501b is recessed.

Arranging the first protrusion increases the bending, improves the strength of anti-stress, and meets the stability of the explosion-proof value.

As one of the implementations, preferably, the fourth surface 501d is recessed relative to the third surface 501c, and protrudes from the bottom surface of the second surface 501b.

The second step 507 is arranged to form a protrusion on the bottom surface of the second surface 501b, which enhances the structural strength, eliminates residual stress during processing, and prevents bulging and wrinkling of the central pressure release area 504 as the battery swells against the top cover sheet due to an internal slight pressure.

In this embodiment, a sectional angle of the blasting score 506 is 60 degrees to 120 degrees. The depth of the blasting score 506 is set according to an explosion-proof value of the product.

Preferably, the second step 507 is arranged obliquely, and an outer wall of a protruding part of the fourth surface 501d from the bottom surface of the second surface 501b is an inverted tapered surface.

As another implementation manner, preferably, the fourth surface 501d protrudes from the third surface 501c.

Specifically, the central pressure release area 504 is further provided with a first convex portion 508 that is away from the fourth surface 501d. Protrusions are provided on both the inner and outer sides of the central pressure release area 504, which can ensure a vertical shrinkage space of the product, and meet the stability of a blasting value of the product.

Preferably, the first step 502 is arranged obliquely, so that a connecting position of the first surface 501a and the second surface 501b is a tapered surface, and an inner side of the rupture disk body 501 corresponding to the first step 502 is also a tapered surface. The second step 507 is arranged obliquely, so that a connecting position of the third surface 501c and the fourth surface 501d is a tapered surface, and an outer wall of the first convex portion 508 is arranged obliquely, so that the outer wall of the first convex portion 508 is a tapered surface.

In this embodiment, a sectional angle of the blasting score 506 is 60 degrees to 120 degrees. The depth of the blasting score 506 is set according to an explosion-proof value of the product.

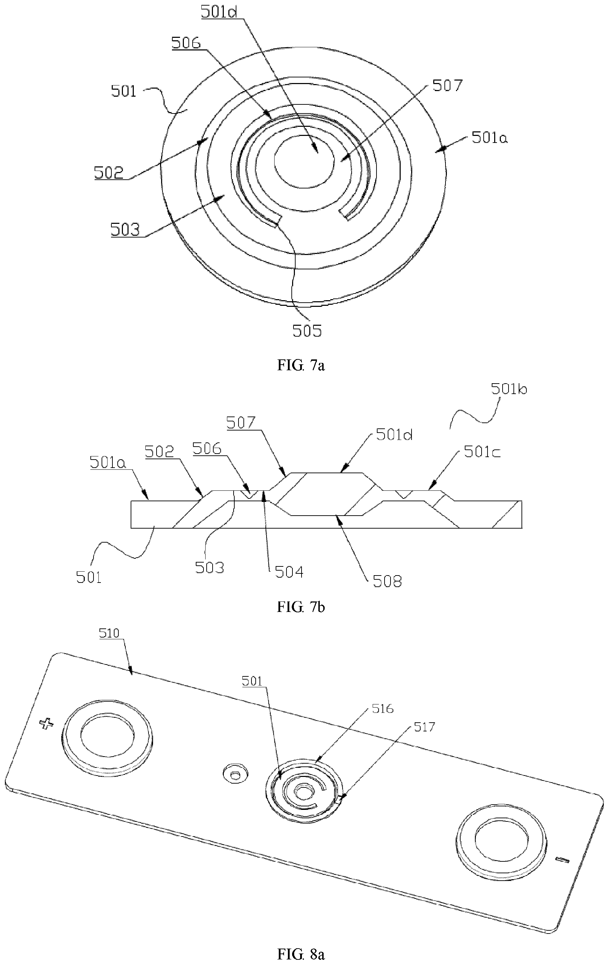

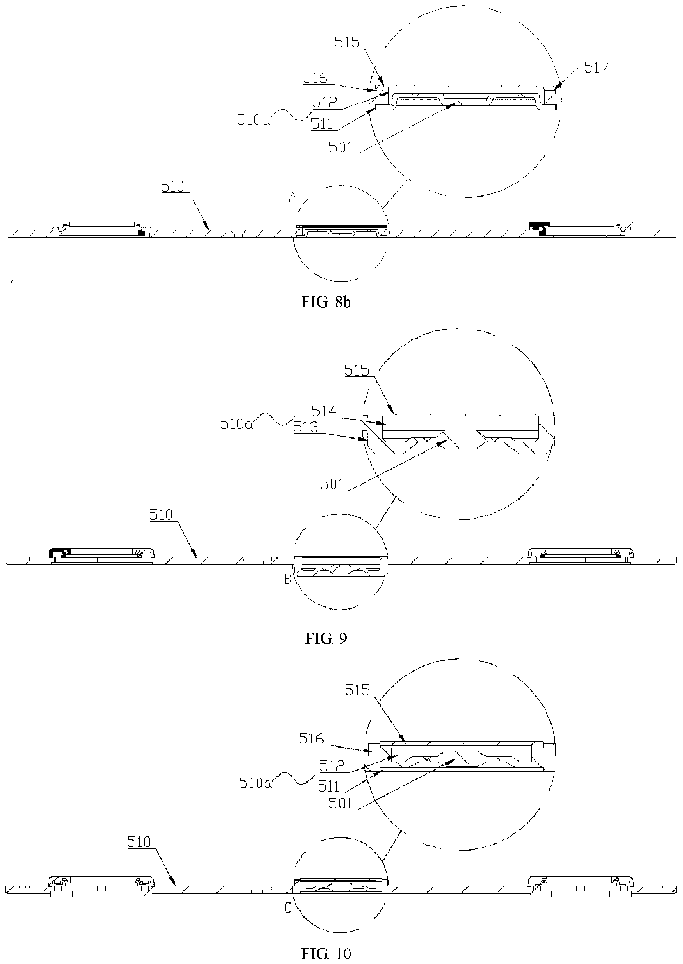

As shown in FIG. 8a, FIG. 8b, FIG. 9 and FIG. 10, a power battery top cover sheet is further provided in the utility model, including a top cover sheet body 510. The top cover sheet body 510 is provided with an explosion-proof hole 510a, and the above power battery rupture disk is installed on the explosion-proof hole 510a.

Preferably, the rupture disk body 501 is welded to or arranged integrally with the top cover sheet body 510.

When the fourth surface 501d is recessed relative to the third surface 501c, the rupture disk body 501 is welded to the top cover sheet body 510. When the fourth surface 501d protrudes from the third surface 501c, the rupture disk body 501 and the top cover sheet body 510 are integrally formed. At this time, the explosion-proof hole 510a is divided into two unconnected grooves by the rupture disk body 501. As one of the implementations, preferably, the explosion-proof hole 510a includes a first groove 511 arranged on the bottom surface of the top cover sheet body 510, and the first groove 511 is provided with a first perforation 512 that penetrates the top cover sheet body 510. The rupture disk body 501 is fitted on the first groove 511.

In this embodiment, a distance between an edge portion of the first surface 501a of the rupture disk body 501 and an inner wall of the first groove 511 is 0.06 mm to 0.12 mm. During welding, welding is performed uniformly around a periphery between the first groove 511 and the outer edge of the rupture disk body 501, and a welding depth reaches more than 0.6 mm.

In this embodiment, the first step 502 is arranged to be perpendicular to the first surface 501a, and a gap between the first step 502 and the inner wall of the explosion-proof hole 510a is 0.1 mm and 0.2 mm, thus ensuring a vertical shrinkage space of the product and meeting the stability of the blasting value.

As another implementation, preferably, the explosion-proof hole 510a includes a second convex portion 513 arranged on the bottom surface of the top cover sheet body 510, and the second convex portion 513 is provided with a second perforation 514 that penetrates the top cover sheet body 510. The rupture disk body 1 is fitted on the second convex portion 513.

Specifically, a protective film 515 is installed on the explosion-proof hole 510a, and there is a gap between the top surface of the rupture disk body 501 and the protective film 515, for ensuring that the rupture disk body 501 does not press against the protective film 515. In this embodiment, the protective film 515 is pasted on the top cover sheet body 510. Preferably, the top cover sheet body 510 is provided with a first slot located outside the explosion-proof hole 510a, and the protective film 515 is pasted on the first slot.

In this embodiment, an opening of the blasting score 506 is arranged toward the protective film 515, that is, arranged upward, or it may be arranged toward an inner side of the top cover sheet body 510, that is, arranged downward. When the blasting score 506 is arranged upward, the sectional angle of the blasting score 506 is 40 degrees to 120 degrees, and the depth of the blasting score 506 is preferably 0.05 mm to 0.25 mm.

As one of the implementations, preferably, a top edge of the explosion-proof hole 510a is provided with a third convex portion 516, and the protective film 515 is installed on the third convex portion 516.

Specifically, an exhaust groove 517 is arranged between the third convex portion 516 and the protective film 515. After the explosion-proof hole 510a is filmed, the air can be exhausted from the exhaust groove 517 during pressure release. When no exhaust groove 517 is arranged, the protective film 515 is provided with an exhaust hole.

Preferably, the third convex portion 516 is provided with a second slot located on an outer side of the explosion-proof hole 510a, and the protective film 515 is pasted on the second slot.

In this embodiment, the second slot is annular, and the exhaust groove 517 is arranged on the third convex portion 516 or the protective film 515. The exhaust groove 517 is arranged on the third convex portion 516 and located on an outer side of the second slot. The coverage angle of the exhaust groove 517 on the third convex portion 516 is 30 degrees to 60 degrees, and the depth of the exhaust groove is 0.3 mm to 0.5 mm.

In the above, the explosion-proof valve 500 is provided with a connecting portion between the edge connection area and the central pressure release area to form a disconnected blasting score. When an internal pressure of the battery reaches a set value, the blasting score cracks to release the pressure. The central pressure release area will not be separated from the rupture disk body due to the limitation of the connecting portion. Two steps are arranged on the rupture disk body to provide a shrinkage space for the product, so that the stress is released. The central pressure release area is not easy to swell due to a slight pressure, thus improving the stability of blasting.

In this embodiment, the second protrusion 122 is arranged obliquely to the outside, and the second concave positioning portion 212 is arranged obliquely to match the obliquely arranged second protrusion 122. The structural design is convenient for injection molding of plastic between the pole hole 31 and the pole; therefore, the production performance is improved, and the firmness of the connection between the pole and the pole hole 31 through the plastic is better, so as to prevent the plastic from falling off during use.

Preferably, the second protrusion 122 includes a conical ring with an upper end diameter greater than a lower end diameter, the second concave positioning portion 212 is a conical annular cavity with an upper end diameter greater than a lower end diameter, and the conical ring of the power battery pole is correspondingly embedded in the conical annular cavity for positioning.

In this embodiment, a concave portion 125 is formed between the second protrusion 122 and an outer wall of the pole portion 11, a convex portion 217 is arranged on an upper inner wall of the receiving portion 21, and the convex portion 217 is correspondingly embedded in the concave portion 125. The structural arrangement further enhances the connection strength between the plastic and the pole.

In this embodiment, a third protrusion 124 is provided on the second protrusion 122, and the third protrusion 124 of the power battery pole is correspondingly embedded in a third concave positioning portion 216 of the second concave positioning portion 212. The structural arrangement further enhances the connection strength between the plastic and the pole.

In this embodiment, a baffle 215 is arranged on an upper side of an opening of the locking recess 214, and the baffle 215 is attached to an outer wall of the locking block 32. The baffle 215 is preferably an annular baffle 215. A bottom end of the annular baffle 215 is inserted into an annular groove located on the periphery of the pole hole 31. The structure arrangement makes the positioning and installation of the insulating barrier 2 on the aluminum plate firmer and more reliable, and improves the use performance.

In this embodiment, a step body 23 is arranged on the insulating barrier 2, a limiting step 312 is arranged on the pole hole 31, and the step body 23 and the limiting step 312 are locked in position with each other. The structure enables the insulating barrier 2 to be positioned more reliably and improves the structural strength.

In this embodiment, the pole hole 31 is further provided with a second recess 311, the insulating barrier 2 is further provided with a second bump 22, and the second bump 22 is correspondingly embedded in the second recess 311. The structure enables the pole to be circumferentially positioned on the insulating barrier 2, for preventing the pole from rotating circumferentially and affecting the battery performance during use.

In this embodiment, the first protrusion 121 is provided with a plurality of third limiting portions for limiting circumferential rotation of the pole body, and the third limiting portions each include a first recess 126 or a first bump. The first recess 126 is arranged on the first protrusion 121, a first positioning bump 218 is arranged on an inner wall of the first concave positioning portion 211, and the first positioning bump 218 is correspondingly embedded in the first recess 126. The structure enables the insulating barrier 2 to be circumferentially positioned on the pole hole 31, for preventing the insulating barrier 2 from rotating circumferentially and affecting the battery performance during use.

As another aspect, a power battery top cover structure preparation method specifically includes the following steps:
S1. Punching an aluminum pole and a copper-aluminum composite pole by a stamping method, so that the aluminum pole and the copper-aluminum composite pole are each formed with a first protrusion 121, a second protrusion 122, and a locking recess portion 123;
S2. Placing a prefabricated top cover sheet in a molding cavity of an injection molding mold, wherein two pole holes 31 on the top cover sheet are respectively located in two mold cavities for molding an insulating barriers 2 in the molding cavity;
S3. Placing the punched aluminum pole and copper-aluminum composite pole into the two pole holes 31 of the top cover sheet, respectively, wherein the aluminum pole and the copper-aluminum composite pole are positioned in the two mold cavities, respectively; and
S4. Injecting liquid plastic into the two mold cavities, wherein the plastic adopts a PPS material, the liquid plastic enters the space between the pole and the pole hole, and forms an insulating barrier after cooling, a locking block 32 on the pole hole 31 is correspondingly embedded in a locking recess 214 of the insulating barrier 2, and a locking protrusion 213 of the insulating barrier 2 is embedded in the locking recess portion 123, the first protrusion 121 is correspondingly embedded in a first concave positioning portion 211 of the insulating barrier 2, and the second protrusion 122 is correspondingly embedded in a second concave positioning portion 212 of the insulating barrier 2, for fixing and installing the aluminum pole and the copper-aluminum composite pole in the two pole holes 31 of the top cover sheet through the insulating barrier, respectively.

The present invention is not limited to the above preferred embodiments. Anyone can derive other products in various forms under the enlightenment of the present invention. However, regardless of any changes in its shape or structure, any products that have technical solutions the same or similar to those of the present application fall within the protection scope of the present invention.

## Claims

1. A power battery top cover structure, **characterized in** comprising a top cover sheet (3) and two power battery poles, wherein the top cover sheet (3) comprises two pole holes (31), the two power battery poles are respectively placed in the two pole holes (31), and an insulating barrier (2) is injection-molded between the power battery pole and the pole hole (31);
the two power battery poles each comprises a pole body, the pole body comprises a pole portion (11) and a connecting portion (12) located on the pole portion (11), the connecting portion (12) comprises a first protrusion (121) located on a root on the pole portion (11) or located on a circumferential side of the pole portion (11) and a second protrusion (122) located on the pole portion (11), and a locking recess portion (123) for limiting an axial movement of the pole body is formed between the first protrusion (121) and the second protrusion (122);
an opening edge of the pole hole (31) is provided with a locking block (32) extending toward an interior of the pole hole (31), and the insulating barrier (2) is provided with a receiving portion (21), a locking recess (214), and a locking protrusion (213), a first concave positioning portion (211), and a second concave positioning portion (212) that are located in the receiving portion (21);
the locking block (32) is correspondingly embedded in the locking recess (214), the connecting portion (12) is received in the receiving portion (21), the locking protrusion (213) is embedded in the locking recess portion (123), the first protrusion (121) is correspondingly embedded in the first concave positioning portion (211), and the second protrusion (122) is correspondingly embedded in the second concave positioning portion (212); and
an explosion-proof valve (4) is arranged on the top cover sheet (3), and the explosion-proof valve (4) comprises a blasting score (506).

2. The power battery top cover structure according to claim 1, **characterized in that** the second protrusion (122) is arranged obliquely to the outside, and the second concave positioning portion (211) is arranged obliquely to match the obliquely arranged second protrusion (122).

3. The power battery top cover structure according to claim 2, **characterized in that** the second protrusion (122) comprises a conical ring with an upper end diameter greater than a lower end diameter, the second concave positioning portion (212) is a conical annular cavity with an upper end diameter greater than a lower end diameter, and the conical ring of the power battery pole is correspondingly embedded in the conical annular cavity for positioning.

4. The power battery top cover structure according to claim 1, **characterized in that** a concave portion (125) is formed between the second protrusion (122) and an outer wall of the pole portion (11), a convex portion (217) is arranged on an upper inner wall of the receiving portion (21), and the convex portion (217) is correspondingly embedded in the concave portion (125).

5. The power battery top cover structure according to claim 1, **characterized in that** a third protrusion (124) is arranged on the second protrusion (122), and the third protrusion (124) of the power battery pole is correspondingly embedded in a third concave positioning portion 216 of the second concave positioning portion (212).

6. The power battery top cover structure according to claim 1, **characterized in that** a baffle (215) is arranged on an upper side of an opening of the locking recess (214), and the baffle (215) is attached to an outer wall of the locking block (32).

7. The power battery top cover structure according to claim 1, **characterized in that** the explosion-proof valve (500) further comprises a rupture disk body (501); the rupture disk body (501) is welded to or arranged integrally with a top cover sheet body (510), the rupture disk body (501) is provided with a first step (502) to form a first surface (501a) and a second surface (501b) with a height difference, the first surface (501a) is located outside an edge of the second surface (501b), the second surface (501b) is provided with an edge connection area (503) and a central pressure release area (504), a connecting portion (505) and a blasting score (506) disconnected at the connecting portion (505) are provided between the edge connection area (503) and the central pressure release area (504), the central pressure release area (504) is provided with a second step (507) to form a third surface (501c) and a fourth surface (501d) with a height difference on the second surface (510b), the third surface (501c) is located outside an edge of the fourth surface (501d), and the blasting score (506) is C-shaped on a surface of the central pressure release area (504).

8. The power battery top cover structure according to claim 1, **characterized in that** a step body (23) is arranged on the insulating barrier (2), a limiting step (312) is arranged on the pole hole (31), and the step body (23) and the limiting step (312) are locked in position with each other.

9. The power battery top cover structure according to claim 1, **characterized in that** the pole hole (31) is further provided with a second recess (311), and the insulating barrier (2) is further provided with a second bump (22), and the second bump (22) is correspondingly embedded in the second recess (311); the first protrusion (121) is provided with a plurality of third limiting portions that limit circumferential rotation of the pole body, and the third limiting portions each comprise a first recess (126) or a first bump, the first recess (126) is arranged on the first protrusion (121), and a first positioning bump (218) is arranged on an inner wall of the first concave positioning portion (211), and the first positioning bump (218) is correspondingly embedded in the first recess (126).
